# EUROPEAN PATENT SPECIFICATION

(11) **EP 0 938 943 B1**
(45) Date of publication and mention of the grant of the patent: **22.05.2002**
(21) Application number: 99102749.1
(22) Date of filing: 22.02.1999
(51) Int. Cl.: B23D 45/12

(54) **Method for cutting and end-facing parallel-undulation flexible metal hoses**
Verfahren zum Trennen und Bearbeiten der Stirnflächen an flexiblen Metallschläuchen mit paralleler Wellung
Procédé de coupage et d'usinage de la surface terminale de tuyaux métalliques à ondulatons parallèles

(30) Priority: 26.02.1998 IT TO980150
(43) Date of publication of application: 01.09.1999
(73) Proprietor: Castelli, Sergio, I-10146 Torino (IT)
(72) Inventor: Castelli, Sergio, I-10146 Torino (IT)
(74) Representative: Modiano, Guido, Dr.-Ing.

(56) References cited:
- DE-U- 9 209 274
- FR-A- 2 722 440

## Description

The present invention relates to a method and to a device for cutting and end-facing parallel-undulation flexible metal hoses for subsequent joining by welding.

It is known that flexible metal hoses are welded to lengths of hose of the same type and of the same dimensions and to endpieces after preparing the cropping flaps, preferably by forming a reinforced lip at the cropping section of the hose; in the present description, the operation for preparing the welding flaps, optionally forming the reinforcement lip, is briefly termed end-facing.

The end-facing of parallel-undulation flexible metal hoses is currently performed in substantially two ways:
a) by flattening the final undulation located at the cropping section of the hose cut to size and consequently forming a stiffened end lip;
b) by removing, with suitable mechanical means, the parts that are in excess with respect to the length of hose cut to size.

Both of these end-facing methods suffer the drawback of requiring subsequent treatment after cropping the hose. End-facing by flattening the final undulation further generates a lip whose outside diameter is greater than the outside diameter of the hose, and this is a considerable hindrance for subsequently fitting any metal braiding protective sheath over the hose.

The aim of the present invention is to eliminate the above drawbacks of conventional cutting and end-facing methods.

Within this aim, an object of the present invention is to provide a method for simultaneous cutting and end-facing which does not require subsequent treatment and can be performed automatically by means of a single tool which is capable of cropping and at the same time end-facing the hose cut to size.

A further object of the present invention is to provide a cutting and end-facing method which is capable of forming a reinforced lip on both of the cropping sections of the hose and wherein the lip has a maximum diameter which is substantially smaller than the maximum outside diameter of the hose, so as to allow the subsequent forming of a welding bead which does not interfere with any metal braiding protective sheath to be fitted over said hose.

A further object of the present invention is to provide a cutting and end-facing method which is extremely simplified, reliable and economically advantageous, especially in large-run productions.

This aim, these objects and others which will become apparent hereinafter from the following detailed description are achieved with a method for cutting and end-facing parallel-undulation flexible metal hoses and with a device for performing said method which have the specific characteristics stated in the appended claims.

The invention consists on the one hand in a method for cutting and end-facing parallel-undulation flexible metal hoses for joining them by welding, comprising the steps of: cutting a hose to size at a centerline plane of a protruding undulation of said hose, and bending over, simultaneously. with the cutting action, the end half undulations in order to form respective reinforced annular end-facing lips, said cutting and bending being performed by means of at least one rotating tool which is subjected to a radial working stroke and revolves about the hose to be cropped and end-faced.

On the other hand, the invention consists in a device for performing this method for cutting and end-facing flexible hoses. This device comprises at least one revolving tool including a pair of lateral guiding and cantering disks and a central cutting blade which is flanked by bending shoulders, the transverse dimensions of the revolving tool being such as to make the lateral disks coincide with respective grooves which are adjacent to a protruding undulation of a hose to be cut and make the central cutting blade coincide with a centerline plane (PM) of said protruding undulation.

According to one embodiment of the invention, the tool is provided with lateral centering and guiding disks, which are arrangeable in the grooves that are adjacent to the protruding undulation to be cut, and with a central cutter whose cutting edge lies in the centerline plane of the undulation which is flanked by shoulders for bending the portions of the half-undulations that have been separated by the cutting action.

Further characteristics and advantages of the cutting and end-facing method and device according to the invention will become apparent from the following detailed description and with reference to the accompanying drawings, given by way of nonlimitative example, wherein:
Figure 1 is a schematic and partial sectional view of a tool for performing the cutting and end-facing process according to the invention on a parallel-undulation flexible metal hose;.
Figure 2 is a schematic front view of an arrangement of a revolving head comprising a set of three tools of Figure 1;
Figures 3 and 3a are schematic sectional views, respectively showing hose lengths treated with the cutting and end-facing method according to the invention butt-welded together and welded to an endpiece.

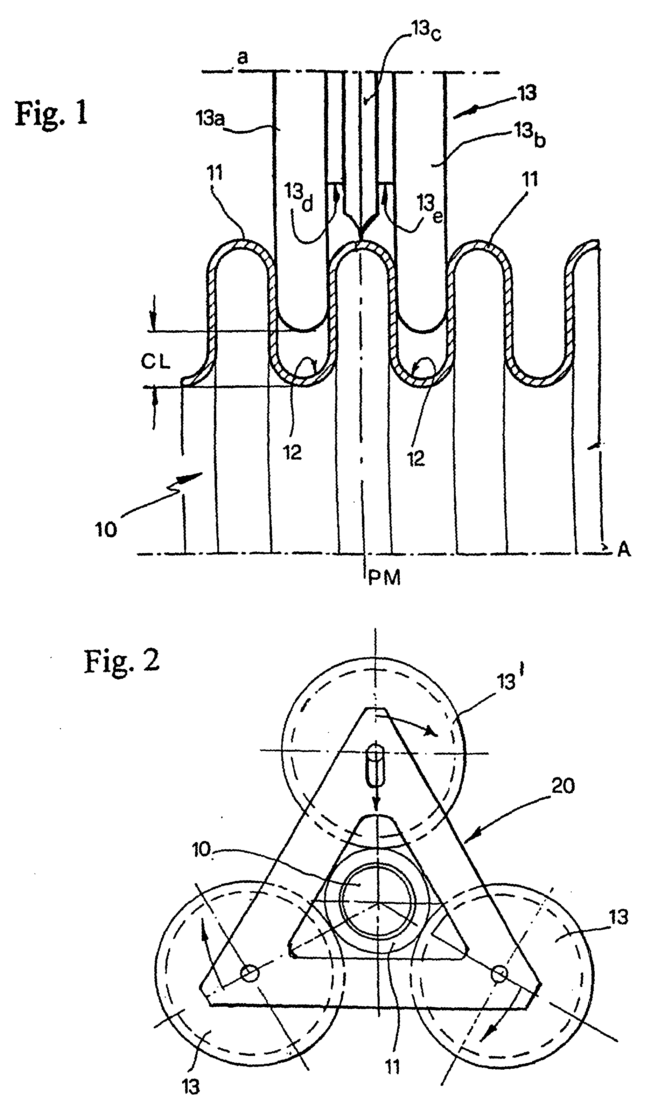

Initially with reference to Figure 1, the reference numeral 10 generally designates a conventional flexible metal hose which has a corrugated outer surface with protruding parallel undulations 11 which are separated by corresponding grooves 12. The reference numeral 13 designates a rotating tool for cutting and end-facing the hose 10 with the method according to the present invention.

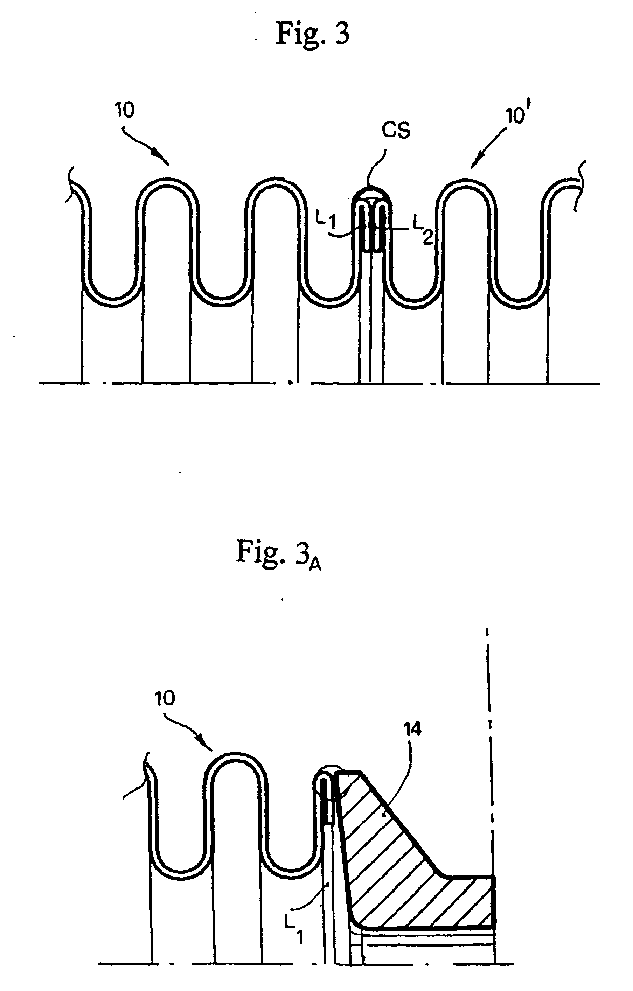

As clearly shown in the figure, the tool 13 is constituted by a roller which is mounted so that it can rotate freely about an axis "a" which is parallel to the axis "A" of the hose 10 and can move radially with respect to the hose 10 by an extent CL termed working stroke. The roller tool 13 is provided with lateral guiding and centering disks 13a-b, which are suitable to be arranged in the grooves 12 that are adjacent to a protruding undulation 11, and with a central cutter 13c whose cutting edge is arranged in a centerline plane PM of the protruding undulation 11. The cutter 13c is flanked by a pair of shoulders 13d-e which are meant to engage and bend back, by virtue of the working stroke of the tool 13, the respective portions of the half-undulations separated by cutting, forming respective reinforced annular end-facing lips L1-L2 (Figure 3). The diameter of these lips is smaller than the maximum diameter of the hose 10, thus allowing to deposit a welding bead CS of substantial thickness without exceeding the maximum hose diameter.

As clearly shown in Figures 3 and 3a, the mutual welding of two hose lengths, such as 10-10', and the welding of a hose length 10 and an endpiece 14 are butt-type welds provided along a mating region which is determined by the annular width of the end-facing lips L1-L2.

Figure 2 illustrates the preferred configuration of a revolving head 20 comprising a set of three rotating cutting and end-facing tools 13 according to the invention. All the tools 13 of the head 20 can move radially in order to perform respective working strokes CL; however, preferably only one tool 13' of the set of three can move radially, while the remaining two are fixed and act as contrast elements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A method for cutting and end-facing parallel-undulation flexible metal hoses for joining them by welding, **characterized in that** it comprises the steps of: cutting a hose (10) to size at a centerline plane (PM) of a protruding undulation (11) of said hose, and bending over, simultaneously with the cutting action, the end half-undulations in order to form respective reinforced annular end-facing lips (L1-L2), said cutting and bending being performed by means of at least one rotating tool (13) which is subjected to a radial working stroke (CL) and revolves about the hose (10) to be cropped and end-faced.

2. The method according to claim 1, **characterized in that** said rotating tool (13) comprises lateral centering disks (13a-b) and is guided with respect to the hose (10) to be cropped by the action of said lateral centering disks (13a-b), which are positioned, for retaining and centering the tool (13), in the grooves (12) that are adjacent to the protruding undulation (11) that is cut.

3. The method according to claim 1, **characterized in that** the bending of the end half-undulations separated by the cropping cut is performed continuously by means of bending shoulders (13d-e) which are provided laterally to a cutting blade (13c) of said revolving tool (13).

4. A device for performing a method for cutting and end-facing parallel-undulation flexible metal hoses for joining them by welding, comprising the steps of: cutting a hose (10) to size at a centerline plane (PM) of a protruding undulation (11) of said hose, and bending over, simultaneously with the cutting action, the end half-undulations in order to form respective reinforced annular end-facing lips (L1-L2), said cutting and bending being performed by means of at least one rotating tool (13) which is subjected to a radial working stroke (CL) and revolves about the hose (10) to be cropped and end-faced, the at least one revolving tool (13) including a pair of lateral guiding and centering disks (13a-b) and a central cutting blade (13c) which is flanked by bending shoulders (13d-e), the transverse dimensions of the revolving tool (13) being such as to make the lateral disks (13a-b) coincide with respective grooves (12) which are adjacent to the protruding undulation (11) of the hose (10) to be cut and make the central cutting blade (13c) coincide with the centerline plane (PM) of said protruding undulation (11).

5. The device according to claim 4, **characterized in that** it comprises a head (20) which revolves around the hose (10) to be cut and end-faced, and **in that** said head is provided with a set of three revolving tools (13), at least one of which performs a working stroke (CL) which is directed radially with respect to said hose (10).

## Patentansprüche

1. Verfahren zum Schneiden und Endflächenbearbeiten flexibler Parallelrippen-Metallschläuche, um sie durch Schweißen miteinander zu verbinden, **dadurch gekennzeichnet, dass** es die Schritte aufweist:
Zuschneiden eines Schlauches (10) an einer Mittelebene (PM) einer hervorstehenden Rippe (11) des Schlauches und gleichzeitiges Umbiegen der Rippenendhälften zusammen mit dem Schneidvorgang, um jeweils ringförmige Endflächenlippen (L1-L2) zu bilden, wobei das Schneiden und
Biegen von zumindest einem sich drehenden Werkzeug (13) durchgeführt wird, das einem radialen Arbeitshub (CL) ausgesetzt ist und um den abzuschneidenden und endflächenzubearbeitenden Schlauch umläuft.

2. Verfahren nach Anspruch 1, **dadurch gekennzeichnet, dass** das drehende Werkzeug (13) seitliche Mittungsscheiben (13a-b) aufweist und in Bezug auf den abzuschneidenden Schlauch (10) durch die Einwirkung der seitlichen Mittungsscheiben (13a-b) geführt wird, die zum Festhalten und Zentrieren des Werkzeuges (13) in den Ausnehmungen (12) positioniert sind, die zu der hervorstehenden Rippe (11), die geschnitten wird, benachbart sind.

3. Verfahren nach Anspruch 1, **dadurch gekennzeichnet, dass** das Umbiegen der Rippenendhälften, die durch das Zerschneiden getrennt wurden, kontinuierlich durch Biegeschultern (13d-e) durchgeführt wird, die seitlich zu einem Abschneidmesser (13c) des umlaufenden Werkzeuges (13) vorgesehen ist.

4. Vorrichtung zum Durchführen eines Verfahrens zum Schneiden und Endflächenbearbeiten flexibler Parallelrippen-Metallschläuche, um sie durch Schweißen miteinander zu verbinden, mit den Schritten:
Zuschneiden eines Schlauches (10) an einer Mittelebene (PM) einer hervorstehenden Rippe (11) des Schlauches und gleichzeitiges Umbiegen der Rippenendhälften zusammen mit dem Schneidvorgang, um jeweils ringförmige Endflächenlippen (L1-L2) zu bilden, wobei das Schneiden und
Biegen von zumindest einem sich drehenden Werkzeug (13) durchgeführt wird, das einem radialen Arbeitshub (CL) ausgesetzt ist und um den abzuschneidenden und endflächenzubearbeitenden Schlauch umläuft, das zumindest eine umlaufende Werkzeug (13) beinhaltet ein Paar seitlicher Führungs- und Mittungsscheiben (13a-b) und ein zentrales Abschneidmesser (13c), das von Biegeschultern (13d-e) flankiert ist, die transversalen Abmessungen des umlaufenden Werkzeuges (13) sind dergestalt, dass die seitlichen Scheiben (13a-b) mit den jeweiligen
Ausnehmungen (12) übereinstimmen, die benachbart zu der hervorstchenden Rippe (11) des zu schneidenden Schlauches (10) sind und bewirken, dass das zentrale Abschneidmesser (13c) mit der Mittelebene (PM) der hervorstehenden Rippe (11) übereinstimmt.

5. Vorrichtung nach Anspruch 4, **dadurch gekennzeichnet, dass** es einen Kopf (20) aufweist, der um den zu schneidenden und endflächenzubearbeitenden Schlauch (10) umläuft und dass der Kopf mit einem Satz aus drei umlaufenden Werkzeugen (13) versehen ist, von denen zumindest eines einen Arbeitshub (CL) ausführt, der radial in Bezug auf den Schlauch (10) gerichtet ist.

## Revendications

1. Un procédé de découpe et de réalisation de faces d'extrémité de tuyaux métalliques flexibles à ondulation parallèles pour les joindre par soudure, **caractérisé en ce qu'**il comprend les étapes de découpe d'un tuyau (10) à dimensionner au niveau d'un plan de ligne centrale (PM) d'une ondulation saillante (11) dudit tuyau et de flexion, simultanément avec l'action de découpage, des demi-ondulations d'extrémité de façon à former des lèvres respectives formant face d'extrémité annulaire renforcée (L1, L2), ladite découpe et ladite flexion étant réalisées au moyen d'au moins un outil rotatif (13) qui est soumis à une course de travail radial (CL) et tourne autour du tuyau (10) qui doit être taillé et dont on doit réaliser la face d'extrémité.

2. Le procédé selon la revendication 1, **caractérisé en ce que** ledit outil rotatif (13) comprend des disques de centrage latéraux (13a - b) et est guidé par rapport au tuyau (10) à tailler par l'action desdits disques de centrage latéraux (13a - b) qui sont positionnés, pour retenir et centrer l'outil (13), dans les rainures (12) qui sont adjacentes à l'ondulation saillante (11) qui est découpée.

3. Le procédé selon la revendication 1, **caractérisé en ce que** la flexion des demi-ondulations d'extrémité séparées par la coupe de taille est réalisée en continu au moyen d'épaules de flexion (13d - e) qui sont placées latéralement par rapport à une lame de découpe (13c) dudit outil tournant (13).

4. Un dispositif pour réaliser un procédé de découpe et de réalisation de faces d'extrémité de tuyaux métalliques flexibles à ondulations parallèles pour les joindre par soudure, comprenant les étapes de :
- découpe d'un tuyau (10) à dimensionner au niveau d'un plan de ligne centrale (PM), d'une ondulation saillante (11) dudit tuyau, et flexion, simultanément avec l'action de découpage, des demi-ondulations d'extrémité de façon à former des lèvres respectives formant face d'extrémité annulaire renforcée (L1, L2) ladite découpe et ladite flexion étant réalisées au moyen d'au moins un outil rotatif (13) qui est soumis à une course de travail radiale CL et tourne autour du tuyau (10) à tailler et dont on doit réaliser la face d'extrémité,
- l'au moins un outil tournant (13) incluant une paire de disques latéraux de guidage et de centrage (13a - b) et d'une lame de coupe centrale (13c) pourvue d'épaulements de flexion (13d - e) formant des flancs de cette lame, les dimensions transverses de l'outil tournant (13) étant réalisés de sorte à faire coïncider les disques latéraux (13a - b) avec les rainures respectives (12) qui sont adjacentes à l'ondulation en saillie (11) du tuyau (10) à découper et rendre la lame de découpe centrale (13c) coïncidente avec le plan de ligne centrale (PM) de ladite ondulation en saillie (11).

5. Le dispositif selon la revendication 4, **caractérisé en ce qu'**il comprend une tête (20) qui tourne autour du tuyau (10) à découper et dont la face d'extrémité est à réaliser, et **en ce que** ladite tete est munie d'un jeu de trois outils tournants (13), au moins un de ceux-ci réalisant un trajet de travail (CL) qui est dirigé radialement par rapport audit tuyau (10).
